# EUROPEAN PATENT APPLICATION

(11) **EP 3 306 623 A1**
(43) Date of publication of application: **11.04.2018**
(21) Application number: 15893749.0
(22) Date of filing: 04.06.2015
(51) Int. Cl.: H01F 1/147, H01F 1/22, H01F 41/00, H01F 17/04, C08L 83/06

(54) **NOVEL HIGH-DENSITY MAGNETIC COMPOSITE MATERIAL FOR INDUCTOR**

(71) Applicant: Poco Holding Co., Ltd., Nanshan District Shenzen, Guangdong 518000 (CN)
(72) Inventor: GUO, Xiongzhi, Shenzhen Guangdong 518000 (CN); XIAO, Qiang, Shenzhen Guangdong 518000 (CN); RUAN, Jialin, Shenzhen Guangdong 518000 (CN); QIU, Jun, Shenzhen Guangdong 518000 (CN); LIU, Zhida, Shenzhen Guangdong 518000 (CN); LUO, Tao, Shenzhen Guangdong 518000 (CN); ZHANG, Yunfan, Shenzhen Guangdong 518000 (CN)
(74) Representative: Jeannet, Olivier
(86) International application number: PCT/CN2015/080825
(87) International publication number: WO 2016/192093

(57) **Abstract**

Disclosed is a novel high-density magnetic composite material for an inductor. The material is composed of 6-12% of high-temperature resin glue and 88-94% of magnetic powder body in percentage by weight. An integrated inductor magnetic core is simply prepared by means of the magnetic composite material of the disclosure without a large press, thus saving the device investment. The mold loss in a pressing process is reduced, and the production cost is reduced. The operation is simple, a magnet of a complex shape can be produced, and an oversized magnet can be produced. A closed magnetic circuit is formed, and the EMI effect is good. The magnetic composite material of the disclosure enables the density of a solidified magnet to be high under the action of special high-temperature resin glue, it can be guaranteed that the density is 5.5-6.2 g/cm³, the sensitive quality value for preparing an inductor is high, and the initial permeability can be 14µ or above. The magnetic composite material of the disclosure can bear a higher temperature, and can work at the temperature of 180°C. The magnetic composite material of the disclosure is high in utilization rate, low in scrap rate and low in dust rate, and meets the requirement for environmental protection.

## Description

### BACKGROUND

### 1. Technical Field

The present disclosure generally relates to inductor component technology field, and especially relates to a novel high-density magnetic composite material for inductor.

### 2. Description of Related Art

The soft magnetic metal powder core is a new magnetic material having a special feature of magnetic-electric conversion, which is the powder made of metal or alloy soft magnetic material. The magnetic core material is manufactured through a special process. Due that the soft magnetic material has the new feature of magnetic-electric conversion, the material is widely used in various scientific and industrial fields. Thus, the soft magnetic metal powder core plays an irreplaceable role in the power and electronics industry.

Conventional soft magnetic powder core is manufactured basically by pressing via the press machine. The press has certain advantages in manufacturing soft magnetic core, but also has some shortcomings and deficiencies:
1. The press machine is the much large equipment. The pressure per unit area of 1 cm2 needs 15T or more to press the soft magnetic powder core. It cost high equipment investment and high production costs.
2. It requires a mold made of the special material in the pressing process, which has restrictions in the production complex shape. In addition, the mold is consumable and expensive, therefore limiting the rapid development of the magnetic core.
3. After the press process, the soft magnetic core needs some complex processes like an annealing process to eliminate stress, a process to strengthen infiltration, and a chamfering process. The production efficiency is low, and the labor cost is high.
4. The size of the product is limited due to pressure because the large-size product cannot be manufactured by the press machine, restricting the development for the large-size magnetic core.

Chinese Patent Publication No. CN101552091A discloses an inductor of a metal powder injection molding and a processing method of the inductor, which uses a composite material made mainly by metal soft magnetic power and the thermosetting binder to inject. The method, to some extent, solves the problems of high cost of pressing powder and solves the problem regarding complex equipment. But, this method combines thermosetting adhesive and magnetic powder, which results in low inductance and the poor DC bias.

### SUMMARY

To solve the above technique problems, the disclosure provides a novel high-density magnetic composite material for inductor, utilizing the technique solution as below:

A novel high-density magnetic composite material for an inductor includes a high-temperature resin glue having a concentration in a range from 6 to 12%, and a magnetic powder body having a concentration in a range from 88 to 94% in percentage by weight.

Furthermore, the high-temperature resin glue includes a resin glue having a concentration in a range from 70 to 80%, a coupling agent having a concentration in a range from 5 to 10%, and an accelerant having a concentration in a range from 15 to 20% in percentage by weight.

Furthermore, the resin glue is a modified epoxy silicone resin.

Furthermore, the coupling agent is a 3-Mercaptopropylmethyldimethoxysilan.

Furthermore, the accelerant is an isophthalic diamine.

Furthermore, a size-ratio of the magnetic powder body is: -100 mesh to 200 mesh having a concentration in a range from 20 to 30%, -200 mesh to 500 mesh having a concentration in a range from 30 to 40%, and -500 mesh having a concentration in a range from 30 to 50% in percentage by weight.

Furthermore, at least one of a ferrosilicon powder, an iron powder, ferrosilicon aluminum powder, iron nickel powder, and ferrosilicochromium powder.

Furthermore, at least one of a ferrosilicon powder, an iron powder, ferrosilicon aluminum powder, iron nickel powder, and ferrosilicochromium powder.

Compared with the prior art, the beneficial effects of the disclosure are:
1. The magnetic core of the integrated inductor is simply prepared by means of the magnetic composite material of the disclosure without a large press, thus saving the device investment.
2. The integrated inductor prepared by means of the magnetic composite material of the disclosure reduces the mold loss in a pressing process, and the production cost is reduced.
3. The operation for the integrated inductor prepared by means of the magnetic composite material of the disclosure is simple, a magnet of a complex shape can be produced, and an oversized magnet can be produced.
4. The integrated inductor prepared by means of the magnetic composite of the disclosure material forms a closed magnetic circuit, and the EMI effect of the integrated inductor is good.
5. The magnetic composite material of the disclosure enables the density of a solidified magnet to be high under the action of a special high-temperature resin glue. It can be guaranteed that the density is 5.5-6.2 g/cm³, the sensitive quality value for preparing an inductor is high, and the initial permeability can be 14µ or above.
6. The magnetic composite material of the disclosure can bear a higher temperature, and can work at the temperature of 180°C.
7. The magnetic composite material of the disclosure is high in utilization rate, low in scrap rate and low in dust rate, and meets the requirement for environmental protection.

### DETAILED DESCRIPTION

A number of embodiments are disclosed below for elaborating the disclosure. However, the embodiments of the disclosure are for detailed descriptions only, not for limiting the scope of protection of the disclosure. It is clear that the described embodiments are merely part of the embodiments of the disclosure, but not all embodiments. Based on the embodiments of the present disclosure, all other embodiments that persons skilled in the art have no creative work are within the scope of the disclosure.

### Embodiment 1

A method for manufacturing a novel high-density magnetic composite material for an inductor includes the steps of:
1. Preparation of a high-temperature resin glue: it takes 3 minutes to uniformly mix and stir a modified epoxy silicone resin of 0.42 kg, a 3-Mercaptopropylmethyldimethoxysilane of 0.06 kg, and an isophthalic diamine of 0.12 kg to ensure the uniform distribution.
2. Preparation of a magnetic powder body: it takes 30 minutes to uniformly mix and stir a ferrosilicon powder of 1.88 kg having a size mesh of -100 to 200, a ferrosilicon powder of 2.82 kg having a size mesh of -200 to 500, and a ferrosilicon powder of 4.7 kg having a size mesh of -500.
3. Taking 30 minutes to uniformly mix and stir the high-temperature resin glue of 0.6 kg and the magnetic powder body of 9.4 kg to form a uniform high-temperature resin glue in the surface of the magnetic powder to produce the insulating properties, and to ensure that the mixture has the ability of stable flowing features.
4. After the magnet is molded, taking 2 hours at 130 degrees Celsius to solidify the magnet to obtain a composite material having a density of 6.2 g/cm³, and having an initial permeability of up to 35µ. The inner magnet of the composite material is dense and void-free, ensuring the insulating properties between the powders, and reducing the eddy current loss between the particles.

### Embodiment 2

A method for manufacturing a novel high-density magnetic composite material for an inductor includes the steps of:
1. Preparation of a high-temperature resin glue: it takes 3 minutes to uniformly mix and stir a modified epoxy silicone resin of 0.75 kg, a 3-Mercaptopropylmethyldimethoxysilane of 0.07 kg, and an isophthalic diamine of 0.18 kg to ensure the uniform distribution.
2. Preparation of a magnetic powder body: it takes 30 minutes to uniformly mix and stir a ferrosilicon powder of 2.25 kg having a size mesh of -100 to 200, a ferrosilicon powder of 3.15 kg having a size mesh of -200 to 500, and a ferrosilicon powder of 3.6 kg having a size mesh of -500.
3. Taking 30 minutes to uniformly mix and stir the high-temperature resin glue of 1 kg and the magnetic powder body of 9 kg to form a uniform high-temperature resin glue in the surface of the magnetic powder to produce the insulating properties, and to ensure that the mixture has the ability of stable flowing features.
4. After the magnet is molded, taking 2.5 hours at 125 degrees Celsius to solidify the magnet to obtain a composite material having a density of 5.9 g/cm³, and having an initial permeability of up to 19µ. The inner magnet of the composite material is dense and void-free, ensuring the insulating properties between the powders, and reducing the eddy current loss between the particles.

### Embodiment 3

A method for manufacturing a novel high-density magnetic composite material for an inductor includes the steps of:
1. Preparation of a high-temperature resin glue: it takes 3 minutes to uniformly mix and stir a modified epoxy silicone resin of 0.96 kg, a 3-Mercaptopropylmethyldimethoxysilane of 0.06 kg, and an isophthalic diamine of 0.18 kg to ensure the uniform distribution.
2. Preparation of a magnetic powder body: it takes 30 minutes to uniformly mix and stir a ferrosilicon powder of 2.64 kg having a size mesh of -100 to 200, a ferrosilicon powder of 3.52 kg having a size mesh of -200 to 500, and a ferrosilicon powder of 2.64 kg having a size mesh of -500.
3. Taking 30 minutes to uniformly mix and stir the high-temperature resin glue of 1.2 kg and the magnetic powder body of 8.8 kg to form a uniform high-temperature resin glue in the surface of the magnetic powder to produce the insulating properties, and to ensure that the mixture has the ability of stable flowing features.
4. After the magnet is molded, taking 1.5 hours at 140 degrees Celsius to solidify the magnet to obtain a composite material having a density of 5.5 g/ cm³, and having an initial permeability of up to 14µ. The inner magnet of the composite material is dense and void-free, ensuring the insulating properties between the powders, and reducing the eddy current loss between the particles.

### Embodiment 4

A method for manufacturing a novel high-density magnetic composite material for an inductor includes the steps of:
1. Preparation of a high-temperature resin glue: it takes 3 minutes to uniformly mix and stir a modified epoxy silicone resin of 0.7 kg, a coupling agent of 0.1 kg, and an accelerant of 0.2 kg to ensure the uniform distribution.
2. Preparation of a magnetic powder body: it takes 30 minutes to uniformly mix and stir an iron nickel powder of 1.8 kg having a size mesh of -100 to 200, an iron nickel powder of 2.7 kg having a size mesh of -200 to 500, and an iron nickel powder of 4.5 kg having a size mesh of -500.
3. Taking 30 minutes to uniformly mix and stir the high-temperature resin glue of 1 kg and the magnetic powder body of 9 kg to form a uniform high-temperature resin glue in the surface of the magnetic powder to produce the insulating properties, and to ensure that the mixture has the ability of stable flowing features.
4. After the magnet is molded, taking 2 hours at 130 degrees Celsius to solidify the magnet to obtain a composite material having a density of 6.0 g/ cm³, and having an initial permeability of up to 26µ. The inner magnet of the composite material is dense and void-free, ensuring the insulating properties between the powders, and reducing the eddy current loss between the particles.

The inductors are manufactured to the same condition by the composite material of the embodiments 1 to 4, and the inductors are tested by the electrical performance comparison test with the conventional inductor. The data are shown as below:

| | The conventional inductor | The embodiment 1 | The embodiment 2 | The embodiment 3 | The embodiment 4 |
|---|---|---|---|---|---|
| Coil number | 30 | 30 | 30 | 30 | 30 |
| The length of effective magnetic circuit 1 (cm) | 15.8 | 15.8 | 15.8 | 15.8 | 15.8 |
| Initial inductance L@0A | 201.54 | 269.62 | 268.64 | 268.59 | 269.77 |
| The inductance in the 5A L@5A | 180.26 | 266.69 | 265.51 | 265.54 | 266.85 |

For the skilled in the art, it is clear that the disclosure is not limited to the details of an exemplary embodiment. And without departing from the spirit or essential characteristics of the present disclosure, it is possible to realize the disclosure with other specific forms. Therefore, no matter with any points, it should be seen as an exemplary embodiment, but not limiting, the scope of the present disclosure is defined by the appended claims rather than the foregoing description define, and therefore intended to fall claim All changes which come within the meaning and range of equivalents of the elements to include in the present invention.

## Claims

1. A high-density magnetic composite material for an inductor, comprising:
a high-temperature resin glue having a concentration in a range from 6 to 12%; and a magnetic powder body having a concentration in a range from 88 to 94% in percentage by weight.

2. The high-density magnetic composite material for the inductor as claimed in claim 1, wherein the high-temperature resin glue comprises a resin glue having a concentration in a range from 70 to 80%, a coupling agent having a concentration in a range from 5 to 10%, and an accelerant having a concentration in a range from 15 to 20% in percentage by weight.

3. The high-density magnetic composite material for the inductor as claimed in claim 2, wherein the resin glue is a modified epoxy silicone resin.

4. The high-density magnetic composite material for the inductor as claimed in claim 2, wherein the coupling agent is a 3-Mercaptopropylmethyldimethoxysilane.

5. The high-density magnetic composite material for the inductor as claimed in claim 2, wherein the accelerant is an isophthalic diamine.

6. The high-density magnetic composite material for the inductor as claimed in claim 1, wherein a size-ratio of the magnetic powder body is: -100 mesh to 200 mesh having a concentration in a range from 20 to 30%, -200 mesh to 500 mesh having a concentration in a range from 30 to 40%, and -500 mesh having a concentration in a range from 30 to 50% in percentage by weight.

7. The high-density magnetic composite material for the inductor as claimed in claim 6, wherein the magnetic powder body is at least one of a ferrosilicon powder, an iron powder, ferrosilicon aluminum powder, iron nickel powder, and ferrosilicochromium powder.

8. The high-density magnetic composite material for the inductor as claimed in claim 1, wherein the solidified novel high-density magnetic composite material has a density in a range from 5.5 to 6.2 g/cm³, and has an initial permeability in a range from 14 to 55µ.
